# EUROPÄISCHE PATENTSCHRIFT

(11) **EP 2 412 880 B1**
(45) Veröffentlichungstag und Bekanntmachung des Hinweises auf die Patenterteilung: **20.03.2013**
(21) Anmeldenummer: 11172617.0
(22) Anmeldetag: 05.07.2011
(51) Int. Cl.: E03F 5/14

(54) **Vorrichtung und Verfahren zum Entfernen von Siebgut aus einer Flüssigkeit**
Device and method for removing sieving material from a liquid
Dispositif et procédé destinés à supprimer des produits à tamiser à partir d'un liquide

(30) Priorität: 26.07.2010 DE 102010038417
(43) Veröffentlichungstag der Anmeldung: 01.02.2012
(73) Patentinhaber: Huber SE, 92334 Berching (DE)
(72) Erfinder: Frommann, Christian, 92318 Neumarkt (DE); Spenger, Franz, 91187 Röttenbach (DE); Reber, Stefan, 90429 Nürnberg (DE)
(74) Vertreter: Bergmeier, Werner

(56) Entgegenhaltungen:
- WO-A1-2004/065706
- DE-A1- 4 136 401
- DE-A1- 19 514 596

## Beschreibung

Die vorliegende Erfindung betrifft eine Vorrichtung zum Entfernen von Siebgut aus einer Flüssigkeit, insbesondere aus Abwasser, mit zumindest einem Siebelement, beispielsweise in Form eines Siebkorbs, das im Bereich einer Stirnseite eine Zulauföffnung aufweist, durch die Flüssigkeit in den Innenraum des Siebelements einströmen kann, und mit einem Antrieb, mit dessen Hilfe das Siebelement um eine Drehachse rotierbar ist. Ferner wird ein Verfahren zum Entfernen von Siebgut aus einer Flüssigkeit, insbesondere aus Abwasser, vorgeschlagen, wobei eine Siebvorrichtung zum Einsatz kommt mit zumindest einem Siebelement, beispielsweise in Form eines Siebkorbs, welches mit einem Antrieb um eine Drehachse rotierbar ist.

Eine Vorrichtung der eingangs beschriebenen Art ist aus der DE 34 20 157 C1 bekannt. Diese weist einen mit seiner Achse schräg in ein Gerinne eingestellten zylindermantelförmigen Siebrost auf, der anströmseitig hydraulisch offen und abströmseitig im Wesentlichen hydraulisch geschlossen ausgebildet ist. Der Siebrost ist mit einer Schlitzlochung versehen, die auf der Innenseite eine Abscheidefläche bildet, während die Flüssigkeit durch die Schlitze hindurchtritt und im Gerinne verbleibt. Der Siebrost wird in Verbindung mit einer Förderschnecke umlaufend angetrieben, wobei diese an einem Einwurftrichter beginnt, der koaxial im Bereich des Siebrosts ortsfest angeordnet und gelagert ist. Oberhalb des Einwurftrichters ist auf der Außenseite des Siebrosts eine ortsfest angeordnete Ablöseeinrichtung in Form einer Bürstenwalze oder einer Spritzwasserleiste vorgesehen, um von außen das an der Innenseite des Siebrosts befindliche Siebgut abzulösen. Das Siebgut fällt schließlich in den Einwurftrichter, an dem die Förderschnecke beginnt, und wird von dieser zu einer Abwurfstelle außerhalb der Flüssigkeit abtransportiert.

Eine vergleichbare Vorrichtung zeigt auch die WO 2004/065706 A1. Diese zeichnet sich erfindungsgemäß dadurch aus, dass der rotierende Siebrost ein gestaltgebendes Tragelement und ein die Abscheidefläche bildendes Maschengewebe aufweist. Ferner ist ebenfalls ein bodenseitiger Einwurftrichter und eine nachgeordnete Schneckenfördereinrichtung vorhanden. Schließlich weist der Siebrost an seiner Innenseite Leitbleche auf, die zur Bildung von Fördertrögen für ein Gemisch aus Flüssigkeit und Siebgut gegen die Abscheidefläche des Maschengewebes angestellt sind.

Eine weitere Ausführung gattungsgemäßer Anlagen beschreibt die DE 41 36 401 A1. Erfindungsgemäß zeichnet sich die dort offenbarte Vorrichtung dadurch aus, dass die Drehzahlen von Siebkorb und Austragsschnecke unterschiedlich gewählt werden können, wodurch die Verstopfungsgefahr der Anlage verringert werden soll.

Ähnlich arbeitende Filter sind in Form sogenannter Trommelfilter im Einsatz, wobei diese meist um eine horizontale Drehachse angetrieben werden und in unterschiedlichsten Industriezweigen, wie beispielsweise der Abwasserreinigung, der Papierherstellung oder auch der Lebensmittelindustrie Verwendung finden. Eine entsprechende Filtereinrichtung zeigt beispielsweise die DE 195 14 596 A1, die vergleichbar zu den bisher beschriebenen Anlagen ebenfalls eine drehbare Siebtrommel sowie eine zentral angeordneten Austragsvorrichtung mit einer angetriebenen Schneckenwendel besitzt.

Während die genannten Filter bestens geeignet sind, um größere und schwerere Verunreinigungen aus einem Fluid zu entfernen, entstehen bei sehr feinen oder auch leichten Verschmutzungen oftmals Probleme bei der Entfernung der Siebstoffe aus der Siebvorrichtung, da diese entweder nicht hinreichend von der Austragsvorrichtung erfasst werden können, oder aber in diesem Bereich aufschwimmen und den Austrag somit erheblich erschweren. Es ist daher Aufgabe der Erfindung, eine Vorrichtung und ein Verfahren vorzuschlagen, mit deren Hilfe die Entfernung von Siebstoffen unterschiedlichster Größe und Masse aus einer Flüssigkeit gelingt, wobei dennoch die Vorteile herkömmlicher Rotationsfilter erhalten bleiben sollen.

Gelöst wird diese Aufgabe bezüglich der Vorrichtung dadurch, dass innerhalb des Siebelements eine Auffangvorrichtung angeordnet ist zum Auffangen von Flüssigkeit und/oder Siebgut, wobei der Auffangvorrichtung eine Abpumpeinrichtung für die Flüssigkeit und/oder das Siebgut zugeordnet ist. Während in den oben genannten Filtervorrichtungen in der Regel ausschließlich Förderschnecken zum Einsatz kommen, deren Förderleistung insbesondere auch von der Beschaffenheit des Siebguts abhängt, können durch die erfindungsgemäße Auffangvorrichtung auch kleinste Bestandteile, die nach dem Filtervorgang von der Filterfläche abgelöst werden, aufgefangen und schließlich mit Hilfe der Abpumpeinrichtung aus der Filteranlage entfernt werden. Die Auffangvorrichtung ist hierbei vorteilhafterweise im zentralen Bereich des Siebelements angeordnet, so dass von der Siebfläche abfallende Siebstoffe nach unten in die Auffangvorrichtung fallen können. Neben dem Siebgut kann mit Hilfe der Auffangvorrichtung auch entsprechende Flüssigkeit aufgefangen werden, die entweder am Siebgut haftet, oder aber ebenfalls vom oberen Bereich der in der Regel horizontal oder geneigt angeordneten Siebfläche nach unten tropft. Wird diese Flüssigkeit aufgefangen, so hat dies den Vorteil, dass die aufgefangenen Siebstoffe zusammen mit der Flüssigkeit eine Suspension bilden und schließlich gemeinsam abgepumpt werden können. Die Auffangvorrichtung übernimmt somit in diesem Fall in Verbindung mit der Abpumpeinrichtung die Funktion einer herkömmlicherweise eingesetzten Austragschnecke, wobei auch besonders feine Siebstoffe ausgetragen werden können. Schließlich wird durch die Auffangvorrichtung verhindert, dass bereits ausgefilterte Siebstoffe wieder zurück in die ungeklärte Flüssigkeit fallen können, so dass die einzelnen Siebstoffe zuverlässig entfemt werden können.

Vorteilhaft ist es, wenn der Auffangvorrichtung innerhalb des Siebelements ein Zuführbereich, beispielsweise in Form eines Einwurftrichters, für das Siebgut und/oder die Flüssigkeit zugeordnet ist. Hierdurch wird sichergestellt, dass das während der Rotation der Filterfläche herabfallende Siebgut bzw. die herabtropfende Flüssigkeit sicher aufgefangen und in die Auffangvorrichtung geleitet werden können. Die Auffangvorrichtung ist hierbei vorzugsweise im zentralen Bereich des Filterelements, insbesondere im Bereich der Rotationsachse, angeordnet. Ist der Zuführbereich als Einwurftrichter ausgebildet, so hat dies den entscheidenden Vorteil, dass alle Siebstoffe, die durch Abstreifelemente (z. B. Flüssigkeits- oder Luftdüsen, Bürstenelemente oder Schaber), oder bedingt durch die Schwerkraft von der Siebfläche nach unten fallen, während sich das Siebelement um eine horizontale oder hierzu geneigte Achse dreht, sicher aufgefangen werden können. Die Siebstoffe und auch die heruntertropfende Flüssigkeit, die an den Siebstoffen oder der Siebfläche haftet, gelangt auf diese Weise zuverlässig über den Zuführbereich in die Auffangvorrichtung und kann anschließend aus dieser abgepumpt werden. Die Siebfläche kann generell aus einem Loch- und/oder Schlitzblech bestehen. Denkbar sind ebenso feinmaschige Siebgewebe, die vorzugsweise auf ein entsprechendes Traggerüst, beispielweise eine Armtrommel, aufgebracht und von dieser gestützt werden. Ebenso kann das Material der Siebfläche entsprechend angepasst werden und Metall, verschiedenste Kunststoffe und/oder auch natürliche Materialien umfassen.

Des Weiteren ist es vorteilhaft, wenn die Wandung der Auffangvorrichtung außer im Bereich des Zuführbereichs gegenüber dem Innenraum des Siebelements flüssigkeitsdicht ausgebildet ist. Dies ist insbesondere dann von erheblichem Vorteil, wenn das Siebelement zumindest teilweise in die zu filtemde Flüssigkeit eingetaucht ist. Dies ist beispielsweise bei entsprechenden Siebvorrichtungen der Fall, die horizontal oder auch schräg geneigt innerhalb einer Flüssigkeitsströmung, beispielsweise einer Abwasserströmung, angeordnet sind. Würde nun die Auffangvorrichtung im Bereich ihrer Seitenwände Durchbrechungen aufweisen, so käme es zum Eintritt von ungereinigter Flüssigkeit und damit einer ungewollten Verdünnung der bereits abgetrennten Siebstoffe. Falls notwendig, ist es auch möglich, eine der Seitenwände der Auffangvorrichtung zusätzlich zu erhöhen. Dies ist insbesondere bei schräg geneigten Siebelementen von Vorteil, da hier die Auffangvorrichtung meist ebenfalls schräg angeordnet ist. Erhöht man nun zumindest den der Strömung zugewandten Abschnitt und den entsprechend angrenzenden Seitenbereich der Auffangvorrichtung, so ist gewährleistet, dass alle Wandabschnitte der Auffangvorrichtung den Flüssigkeitsspiegel der in das Filterelement einströmenden Flüssigkeit überragen.

Vorteilhaft ist es zudem, wenn die Auffangvorrichtung trogartig ausgebildet ist. Die Auffangvorrichtung ist insbesondere in diesem Fall im zentralen Bereich des Siebelements angeordnet und bildet somit eine Art Auffangwanne, in die schließlich die ausgefilterten Siebstoffe bzw. entsprechend abgeschiedene Flüssigkeit gelangt.

Auch ist es von Vorteil, wenn sich die Auffangvorrichtung im Wesentlichen über die gesamte Länge oder zumindest einen Teilabschnitt des Zuführbereichs erstreckt, um einerseits ein möglichst großes Auffangvolumen zu erhalten und andererseits sicherzustellen, dass zumindest der Großteil der vom Siebelement herabtropfenden Flüssigkeit, oder je nach Konstruktion der Vorrichtung, auch die herabfallenden Siebstoffe sicher aufgefangen werden können. In diesem Zusammenhang ist es ebenso von Vorteil, wenn nicht die Siebstoffe zusammen mit entsprechend anhaftender oder auf zusätzliche Weise ausgetragener Flüssigkeit, sondern ausschließlich Flüssigkeit von der Auffangvorrichtung aufgefangen und abgepumpt wird. In diesem Fall ist eine der Auffangvorrichtung vorgeschaltete, im Folgenden näher beschriebene Trennung von Flüssigkeit und ausgefilterten Siebstoffen notwendig, so dass schließlich lediglich die Flüssigkeit in die Auffangvorrichtung gelangen kann.

Für die notwendig Trennung von Flüssigkeit und Siebstoffen kann es beispielsweise vorteilhaft sein, wenn die erfindungsgemäße Vorrichtung eine wenigstens teilweise innerhalb des Siebelements angeordnete Austragsvorrichtung für das Siebgut, vorzugsweise in Form einer Förderschnecke, aufweist. Die Austragsvorrichtung ist in diesem Fall vorteilhafterweise mit Hilfe eines zusätzlichen Filterelements von der Auffangvorrichtung getrennt, so dass die durch die Rotation des eigentlichen Filterelements ausgetragenen Siebstoffe sowie die mitgeführte Flüssigkeit vor der Austragsvorrichtung möglichst zuverlässig getrennt werden können. Die Flüssigkeit gelangt schließlich in die Auffangvorrichtung, aus der sie mit Hilfe der Abpumpeinrichtung entfernt wird, während die Siebstoffe durch die Austragsvorrichtung ausgetragen werden.

Auch ist es äußert vorteilhaft, wenn der Zuführbereich zumindest einen durchbrochenen Wandabschnitt aufweist, der oberhalb der Auffangvorrichtung angeordnet ist. Die Siebstoffe, die an dem Siebelement haften und schließlich nach entsprechender Drehung im oberen Bereich des Siebelements abgelöst werden bzw. schwerkraftbedingt selbstständig nach unten fallen, gelangen in diesem Fall zunächst in den Zuführbereich und hierbei in den Bereich des durchbrochenen Wandabschnitts, der als zusätzliches Filterelement wirkt. In diesem Bereich kommt es zu einer weiteren Trennung der Siebstoffe von daran anhaftender bzw. durch das rotierende Siebelement ausgetragener Flüssigkeit. Während die Siebstoffe nun von der Austragsvorrichtung, in der Regel in Form einer Förderschnecke, ausgetragen werden können, gelangt die abgeschiedene Flüssigkeit in die Auffangvorrichtung und kann schließlich, eventuell in Verbindung mit entsprechend feinen Siebstoffen, die nicht von dem durchbrochenen Wandabschnitt zurückgehalten werden können, abgepumpt werden. Im Ergebnis kommt es zunächst zu einer ersten Trennung von Siebstoffen und Flüssigkeit mit Hilfe des eigentlichen rotierenden Siebelements. Im Anschluss folgt eine zusätzliche Trennung der Siebstoffe von mitgeführter Flüssigkeit und eventuell auch feinsten Verunreinigungen, die schließlich gemeinsam mit der Flüssigkeit aufgepumpt werden.

In diesem Zusammenhang wird zudem ein weiterer entscheidender Vorteil der Auffangvorrichtung erkennbar. Da diese nämlich in der Regel unterhalb der Austragsvorrichtung angeordnet ist, verhindert sie auf einfache Weise, dass Flüssigkeit von unten in die Austragsvorrichtung gelangt und ein Aufschwemmen der Siebstoffe bewirkt. So weisen die Förderschnecken in bekannten Siebvorrichtungen in der Regel eine nach unten offene Begrenzungsfläche auf, auf der die Außenkanten der Förderschnecke geführt werden und hierdurch Siebgut in Förderrichtung transportieren. Diese Begrenzungsfläche ist jedoch stets durchbrochen ausgebildet, so dass am Siebgut anhaftende Flüssigkeit nach unten abtropfen kann und nicht mit der Förderschnecke ausgetragen wird. Durch diese durchbrochenen Begrenzungsflächen kann jedoch zumindest im unteren Bereich eines schräg in die zu filtemde Flüssigkeit eintauchenden Trommelfilters je nach Flüssigkeitsstand auch Flüssigkeit von unten nach oben in die Austragsvorrichtung strömen, so dass der gewünschte Erfolg ausbleibt. Vielmehr kommt es in diesem Bereich zu einem Aufschwemmen von Siebgut, das einen Austrag erheblich erschwert bzw. unmöglich macht, wenn das Siebelement zu weit in die Flüssigkeit getaucht wird. Wird jedoch nun in erfindungsgemäßer Weise unterhalb der Austragsvorrichtung eine Auffangvorrichtung angeordnet, die insbesondere mit Ausnahme eines nach oben zeigenden Zuführbereichs gegenüber der zu filternden Flüssigkeit flüssigkeitsdicht ausgebildet ist, so wird ein zusätzliches Eindringen von Flüssigkeit in die Austragsvorrichtung verhindert. Die normalerweise durch die oben beschriebene Begrenzungsfläche in die ungeklärte Flüssigkeit zurückfließende Flüssigkeit wird in diesem Fall von der darunter angeordneten Auffangvorrichtung aufgefangen und anschließend abgeführt. Das Siebelement kann auf diese Weise weitaus tiefer in die zu reinigende Flüssigkeit eingetaucht werden, als herkömmliche gattungsgemäße Siebvorrichtungen. Folglich weist eine derartige Filtervorrichtung eine wesentlich höhere effektive Filterfläche und damit auch eine höhere Filterleistung auf. Selbstverständlich ist hierbei zu beachten, dass die jeweiligen Wandungen der Auffangvorrichtung derart bemessen und ausgerichtet sind, dass der genannte ungewünschte Flüssigkeitseintritt von unten verhindert werden kann.

Ebenso ist es vorteilhaft, wenn der durchbrochene Wandabschnitt als gemeinsame Wandung des Zuführbereichs und der Auffangvorrichtung ausgebildet ist. Die Auffangvorrichtung weist in diesem Fall ein geschlossenes Auffangvolumen auf, das nach oben durch den durchbrochenen Wandabschnitt begrenzt wird. Fällt nun von der Innenfläche des sich drehenden Siebelements das zurückgehaltene Siebgut von der Siebfläche nach unten, so landet es auf dem Wandabschnitt der Auffangvorrichtung, wobei sich lösende Flüssigkeit in der darunter liegenden Auffangvorrichtung sammeln kann. Das von dem Wandabschnitt zurückgehaltene Siebgut kann schließlich von einer Austragvorrichtung aus der Filtervorrichtung entfernt werden, wobei die Austragsvorrichtung vorzugsweise eine Förderschnecke umfasst, deren Außenkanten während der Drehung der Schnecke zumindest teilweise entlang des Wandabschnitts geführt werden. Der Wandabschnitt dient somit einerseits als Wandabschnitt der Auffangvorrichtung und andererseits als Gegenfläche der Förderschnecke, entlang derer die Siebstoffe nach außen transportiert werden.

Besondere Vorteile bringt es mit sich, wenn der durchbrochene Wandabschnitt des Zuführbereichs eine Siebweite aufweist, die kleiner oder gleich der Siebweite des Siebelements ist. Auf diese Weise wird sichergestellt, dass über die Auffangvorrichtung keine Siebstoffe aus der Siebvorrichtung entfernt werden, die eigentlich von der Siebfläche des rotierenden Siebelements zurückgehalten werden sollen. Dies ist insbesondere dann von erheblichem Vorteil, wenn die mit Hilfe der Auffangvorrichtung aufgefangene Flüssigkeit der Flüssigkeit zugeführt wird, die das Siebelement passiert (beispielsweise im Fall von Rotationsfiltern, die in Abwasserkanälen angeordnet sind und bei denen gefilterte Flüssigkeit nicht aus dem Kanal entfernt werden soll oder kann, sondern vielmehr wieder dem Gerinne, in Strömungsrichtung gesehen nach der Filtervorrichtung, zugeführt wird).

Auch ist es von Vorteil, wenn die Auffangvorrichtung und/oder der Zuführbereich zumindest einen lösbar angeordneten Wandabschnitt aufweisen, um das Innere der Auffangvorrichtung warten und reparieren zu können. Dies ist insbesondere dann von erheblichem Vorteil, wenn die Pumpvorrichtung selbst innerhalb der Auffangvorrichtung angeordnet ist. Auch können sich in der Auffangvorrichtung zusätzliche Filter oder auch andere mechanische Bauteile befinden, die regelmäßig überprüft werden müssen.

Des Weiteren ist es vorteilhaft, wenn die Abpumpeinrichtung zumindest ein Abzugsrohr aufweist, das sich in die Auffangvorrichtung erstreckt oder mit einer Öffnung der Auffangvorrichtung verbunden ist, wobei die Abpumpeinrichtung vorzugsweise außerhalb der Auffangvorrichtung angeordnet ist. Hierdurch ist die Abpumpeinrichtung zu Wartungs- und Reparaturzwecken zugänglich, während sich ins Innere der Auffangvorrichtung lediglich ein wartungsarmes bzw. wartungsfreies Rohrstück erstreckt.

Besondere Vorteile bringt es mit sich, wenn die Abpumpeinrichtung, insbesondere unter Zwischenschaltung einer Steuereinheit, mit einem Füllstandssensor in Wirkverbindung steht, der den Flüssigkeitspegel innerhalb der Auffangvorrichtung detektiert. Die Abpumpeinrichtung muss in diesem Fall nur betrieben werden, wenn ein bestimmter Maximalpegel innerhalb der Auffangvorrichtung erreicht wird, so dass der Energiebedarf minimiert werden kann. Alternativ oder auch zusätzlich kann die Filtervorrichtung auch über eine entsprechende Steuerung verfügen, die eine zeitliche Entleerung der Auffangvorrichtung einleitet. Ebenso können Vorrichtungen zur Femsteuerung vorhanden sein, die ein Durchführen des Abzugsvorgangs aus der Ferne erlauben.

Besonders vorteilhaft ist es, wenn das Siebelement und/oder die Auffangvorrichtung gegenüber der Horizontalen geneigt angeordnet ist, um die Siebvorrichtung insbesondere in strömenden Flüssigkeiten, und damit beispielsweise innerhalb eines Abwasserkanals, anordnen zu können. Ist die Auffangvorrichtung, wie oben beschrieben, mit Ausnahme eines Zuführbereichs flüssigkeitsdicht ausgebildet, kann das eigentliche Filterelement tiefer in die Flüssigkeit eingetaucht werden als die Filterelemente herkömmlicher Anlagen, da ein ungewünschtes Aufschwimmen von Siebgut im Bereich einer Austragsvorrichtung vermieden wird.

Das erfindungsgemäße Verfahren zum Entfernen von Siebgut aus einer Flüssigkeit zeichnet sich schließlich dadurch aus, dass Flüssigkeit und/oder Siebgut mit Hilfe einer innerhalb des Siebelements angeordneten Auffangvorrichtung aufgefangen und anschließend mittels einer Abpumpeinrichtung aus der Auffangvorrichtung abgezogen wird. Durch die Auffangvorrichtung kann auf einfache Weise sichergestellt werden, dass feinste Flüssigkeit-Siebgut-Suspensionen, die mit Hilfe von herkömmlichen Austragsvorrichtungen, wie beispielsweise Förderschnecken, nicht mehr erfasst werden können, aus der Filteranlage ausgetragen werden können. Ebenso kann das Verfahren bei der Filtration von gröberem Siebgut aus einer Flüssigkeit eingesetzt werden, bei dem zum Beispiel die genannten Förderschnecken zum Einsatz kommen. Bei derartigen Filteranlagen wird das Siebgut, das sich zusammen mit entsprechend mitgeführter Flüssigkeit im oberen Bereich des rotierenden Siebelements löst, in der Regel im Bereich der Austragsvorrichtung aufgefangen. Die Austragsvorrichtung verfügt in diesem Bereich meist über eine entsprechend durchbrochene Auffangfläche, die ein Abtropfen der Flüssigkeit erlauben soll, bevor die Siebstoffe mit Hilfe der Austragsvorrichtung nach außen abtransportiert werden. Nachteilig hierbei ist, dass Flüssigkeit auch von unten nach oben durch die Durchbrechungen und somit in den Bereich der Austragsvorrichtung strömen kann, wenn das Siebelement zu weit in die zu klärende Flüssigkeit eingetaucht wird bzw. der Flüssigkeitspegel steigt. Es kommt in diesem Fall zu einem Aufschwimmen des Siebguts, das schließlich nicht mehr zuverlässig ausgetragen werden kann. Da nun gemäß einem Aspekt der Erfindung die Flüssigkeit, die vom rotierenden Siebelement nach unten tropft, von einer Auffangvorrichtung aufgefangen und anschließend abgezogen wird, ist es nicht mehr nötig, dass diese Flüssigkeit zurück in die zu klärende Flüssigkeit tropfen kann. Vielmehr wird die Auffangvorrichtung, die vorzugsweise mit Ausnahme eines Zuführbereichs flüssigkeitsdicht ausgebildet ist, unterhalb der Austragsvorrichtung angeordnet und dichtet auch diese gegenüber der sie umgebenden und noch zu klärenden Flüssigkeit ab. Im Ergebnis kann das Filterelement weiter in die Flüssigkeit getaucht werden, als bei herkömmlichen Anlagen, resultierend in einer größeren effizienten Filterfläche und somit auch in einer höheren Filterleistung bei gleicher Baugröße.

Auch ist es äußert vorteilhaft, wenn die aufgefangene Flüssigkeit und/oder das aufgefangene Siebgut kontinuierlich oder chargenweise aus der Auffangvorrichtung abgezogen werden. Während bei einem chargenweisen Abzug in der Regel ein höherer Steuerungsaufwand Voraussetzung für einen einwandfreien Betrieb der Anlage ist, kann hierdurch ein minimaler Energieverbrauch realisiert werden. Um die Anlage weiter zu vereinfachen und damit insbesondere auch die Herstellungskosten zu senken, ist es ferner in einer weiteren Ausgestaltung der Erfindung möglich, den Antrieb der Abpumpeinrichtung, beispielsweise über entsprechende Riemen, Ketten oder Zahnräder, mit dem Antrieb des Siebelements zu koppeln.

Besondere Vorteile bringt es mit sich, wenn die aufgefangene Flüssigkeit und/oder das aufgefangene Siebgut in Abhängigkeit der Betriebszeit der Siebvorrichtung und/oder des Flüssigkeits- bzw. Siebgutpegels innerhalb der Auffangvorrichtung abgezogen werden. Während der Abzug in Abhängigkeit der Zeit, insbesondere bei Anlagen sinnvoll erscheint, die gleichmäßig mit der zu klärenden Flüssigkeit beschickt werden, ist eine Steuerung in Abhängigkeit des Füllstands innerhalb der Auffangvorrichtung bei sämtlichen Anwendungen möglich und meist auch am energieeffizientesten. Der Flüssigkeitspegel kann hierbei im einfachsten Fall mit einem Schwimmer aber auch mit Hilfe von entsprechenden Sensoren überwacht werden, die den Pegel berührungslos detektieren.

Vorteilhaft ist es des Weiteren, wenn die abgezogene Flüssigkeit der Siebvorrichtung erneut zugeführt wird, falls die abgezogene Flüssigkeit Siebgut enthält, das eigentlich von der Siebfläche des rotierenden Siebelements zurückgehalten werden soll. Auf diese Weise wird eine Kontamination des Permeats verhindert und eine zuverlässige Reinigung der zu klärenden Flüssigkeit gewährleistet.

Alternativ kann es aber auch vorteilhaft sein, wenn die abgezogene Flüssigkeit der das Siebelement passierenden Flüssigkeit zugeführt wird. Diese Verfahrensführung bietet sich beispielsweise an, wenn durch eine entsprechende Ausgestaltung der Wände der Auffangvorrichtung oder der Anordnung sonstiger zwischen der Auffangvorrichtung und dem Filterelement angeordneter Zwischenfilter sichergestellt ist, dass nur Siebstoffe in die Auffangvorrichtung gelangen können, die auch die Siebfläche des Siebelements passieren können. Die Flüssigkeit, die in die Auffangvorrichtung gelangt, weist in diesem Fall keinerlei Siebstoffe auf, die nicht ins Permeat gelangen dürfen, so dass eine Vermischung dieser Flüssigkeit mit dem Permeat problemlos erfolgen kann.

Weitere Vorteile der Erfindung sind im Zusammenhang mit den nachfolgenden Ausführungsbeispielen beschrieben. Es zeigen:
- **Figur 1**: eine Seitenansicht einer Siebvorrichtung gemäß dem Stand der Technik,
- **Figur 2**: eine Frontansicht des Siebkorbs der Siebvorrichtung gemäß Figur 1 entlang der Linie A-A,
- **Figur 3**: einen Schnitt des Siebkorbs einer erfindungsgemäßen Siebvorrichtung,
- **Figur 4**: eine Frontansicht eines Siebkorbs einer erfindungsgemäßen Siebvorrichtung,
- **Figur 5**: eine perspektivische Ansicht des Inneren eines Siebkorbs einer erfindungsgemäßen Siebvorrichtung, und
- **Figur 6**: eine weitere Seitenansicht eines Siebkorbs einer erfindungsgemäßen Siebvorrichtung.

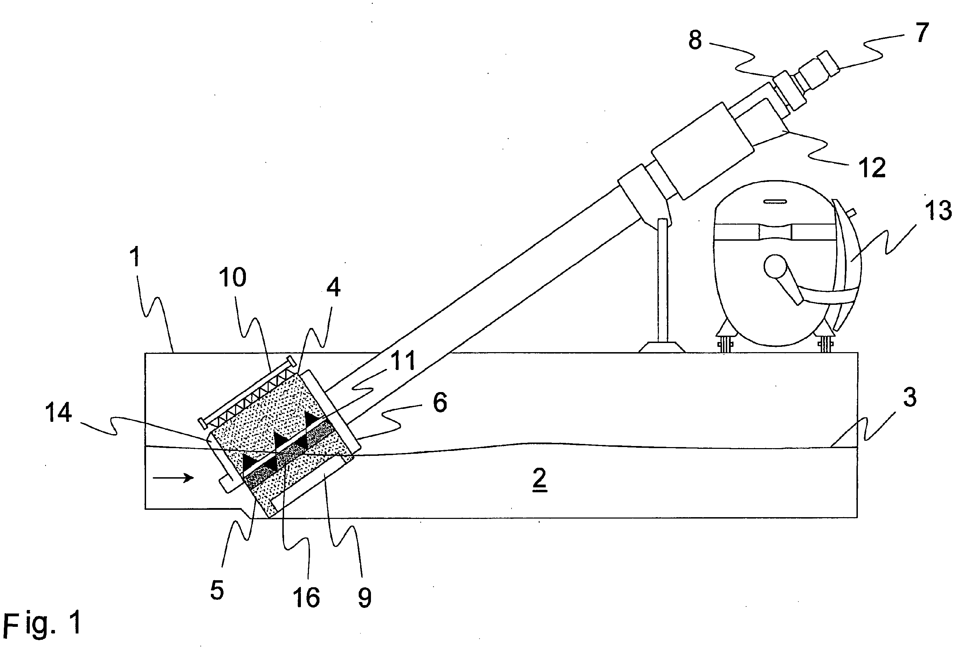

Figur 1 zeigt einen Teil eines Gerinnes 1, in welchem mit Siebgut verschmutztes Abwasser 2 mit einem meist variierenden Wasserstand 3 in Richtung des Pfeils strömt. Die darin angeordnete Siebvorrichtung ist mit ihrer Achse schrägstehend im Gerinne 1 eingebaut und reicht vorzugsweise bis zum Boden des Gerinnes 1, wobei zwischen Gerinne 1 und Vorrichtung eine entsprechende, nicht gezeigte Abdichtung vorhanden sein kann, so dass das verschmutzte Abwasser 2 die Vorrichtung nicht unfiltriert passieren kann.

Die Vorrichtung selbst umfasst ein zylindermantelförmiges Siebelement in Form eines Siebkorbs 4 (in Figur 1 teilweise geschnitten, um ins Innere blicken zu können), dessen Siebfläche beispielsweise durch ein Loch- oder Schlitzblech oder auch durch ein, vorzugsweise von einem Trägerkorb gestütztes, Maschengewebe gebildet werden kann.

Der Siebkorb 4 weist anströmseitig eine offene Stirnseite 5 auf, durch welche das verschmutzte Abwasser 2 in den Innenraum des Siebkorbs 4 einströmen kann. Abströmseitig ist eine entsprechend abgedichtete und damit hydraulisch geschlossene Stirnseite 6 vorgesehen.

Während der Filtration wird der Siebkorb 4 mit Hilfe eines Motors 7 und vorteilhafterweise über ein Getriebe 8 in eine Drehbewegung versetzt. Das von der Filterfläche zurückgehaltene Siebgut wird von der Filterfläche zurückgehalten und schließlich durch die Drehbewegung nach oben gefördert, wobei der Siebkorb 4 zur Unterstützung des Siebguttransports entsprechende Mitnehmerleisten 9 aufweisen kann.

Im oberen Bereich ist schließlich eine Spritzdüsenleiste 10 angeordnet, die ein Ablösen des anhaftenden Siebguts bewirkt, so dass dieses nach unten in den Bereich einer Austragsvorrichtung in Form einer Förderschnecke 11 fällt (anstelle der Spritzdüsenleiste 10 können selbstverständlich auch Luftdüsen, Schaber oder Bürstenelemente angeordnet sein).

Die Förderschnecke 11 reicht schließlich bis in den Bereich einer Auswurfstelle 12 im oberen Abschnitt der Siebvorrichtung, so dass das Siebgut nach oben gefördert und schließlich in einen entsprechenden Container 13 entsorgt werden kann. Die Förderschnecke 11 kann im Verlauf der Förderstrecke eine abnehmende Schraubenhöhe aufweisen, so dass es zusätzlich zu einer Komprimierung des Siebguts innerhalb des oberen Förderabschnitts kommt.

Um schließlich eine Rotation des Siebkorbs 4 zu ermöglichen, ist die Förderschnecke 11 im Bereich der Stirnseiten 5, 6 drehbar gelagert und gegenüber stillstehenden Teilen abgedichtet. Der Antrieb erfolgt in der Regel diskontinuierlich, so dass Stillstandszeiten mit Umlaufzeiten abwechseln. Zur Übertragung der Drehbewegung des Motors 7 auf den Siebkorb 4 ist schließlich am unteren Ende der Schneckenwelle ein Antriebsarml4 vorgesehen, der Schneckenwelle und Siebkorb 4 miteinander verbindet.

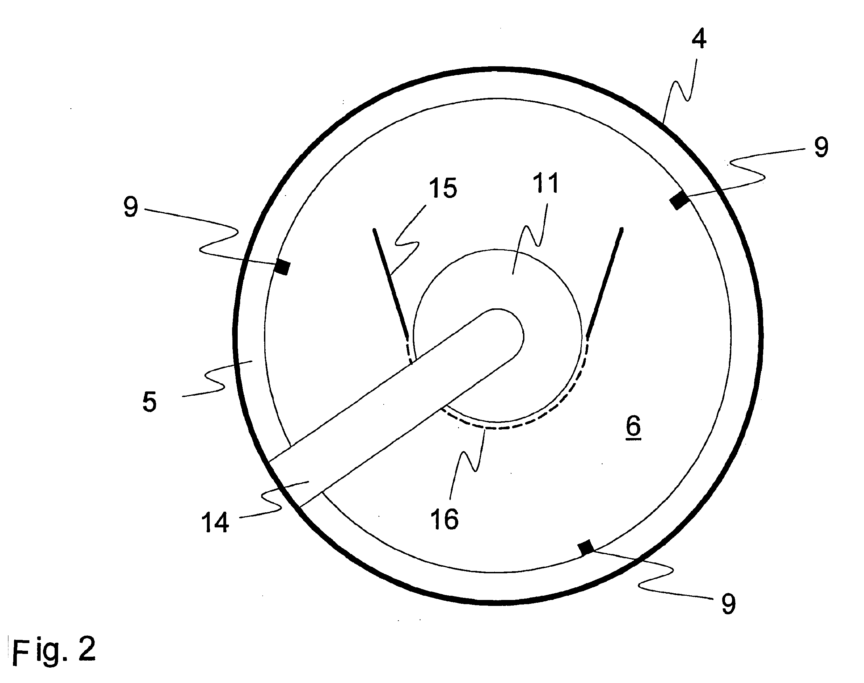

In der Regel werden jedoch durch den Siebkorb 4 zusammen mit dem Siebgut erhebliche Mengen an Flüssigkeit nach oben gefördert und fallen schließlich von oben auf die Förderschnecke 11, wobei diese einen aus Figur 2 ersichtlichen Zuführbereich in Form eines Einwurftrichters 15 aufweist (in Figur 1 nicht dargestellt). Um sicherzustellen, dass diese Flüssigkeit sowie die Flüssigkeit, die während des Transports des Siebguts in Richtung des Containers 13 aus dem Siebgut herausgepresst wird, die Fördervorrichtung auch wieder verlassen kann, ist die unterhalb der Förderschnecke 11 angeordnete Förderfläche durchbrochen ausgestaltet. Durch die entsprechenden Öffnungen 16 kann die Flüssigkeit jederzeit wieder ablaufen, so dass es zumindest oberhalb des Wasserstands 3 nicht zu einem Aufschwimmen des Siebguts kommt. Dies ist wichtig, da schwimmendes Siebgut nicht zuverlässig von der Förderschnecke 11 erfasst und entsprechend abtransportiert werden kann. Unterhalb des Wasserstands 3 kann ein derartiges Aufschwimmen jedoch nicht unterbunden werden, da bedingt durch die Öffnungen 16 auch innerhalb der Förderschnecke 11 der Flüssigkeitsspiegel auf das Niveau des verschmutzten Abwassers 2 steigt.

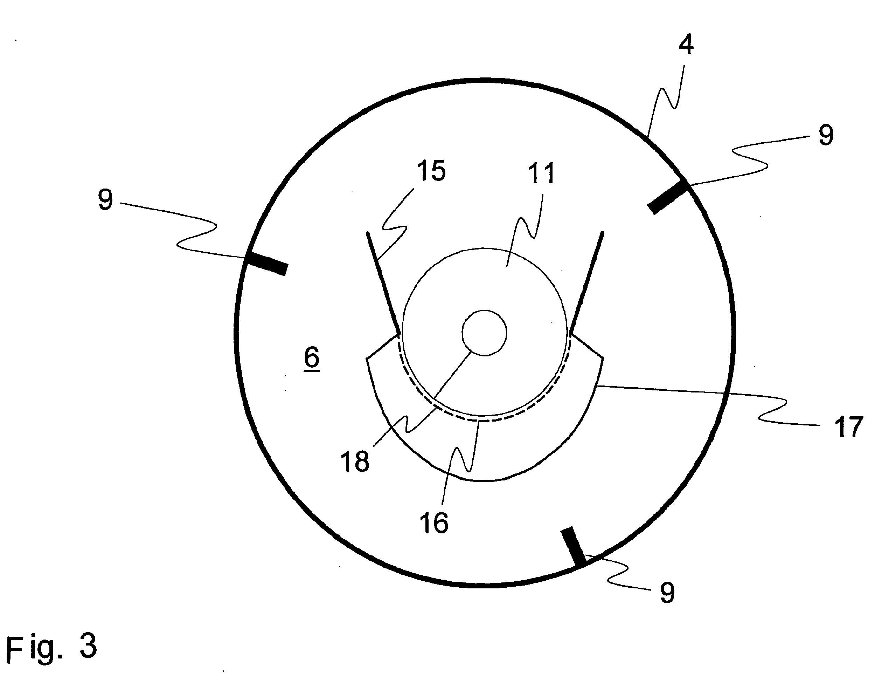

Um diesem Problem zu begegnen, ist nun erfindungsgemäß vorgesehen, innerhalb des Siebelements, das im vorliegenden Beispiel als Siebkorb 4 ausgebildet ist, eine Auffangvorrichtung 17 anzuordnen, mit dessen Hilfe die durch die Öffnungen 16 strömende Flüssigkeit aufgefangen werden kann (s. Figur 3). Während der Filtration fällt nun, wie auch im Fall der Anlage gemäß Figur 1, das Siebgut und daran haftende Flüssigkeit von oben über den Einwurftrichter 15 in den Bereich der Förderschnecke 11. Ebenso kommt es in diesem Bereich zu einer weiteren Trennung von Flüssigkeit und Siebgut, wobei zusätzlich auch Flüssigkeit durch das Kompaktieren des Siebguts mit Hilfe der Förderschnecke 11 frei wird und nach unten in den Bereich des Einwurftrichters 15 fließt. Die Flüssigkeit strömt jedoch nun nicht mehr zurück in den Abwasserkanal, sondern wird vielmehr mit Hilfe der trogförmigen Auffangvorrichtung 17 aufgefangen. Diese ist hierfür mit Ausnahme des oberen, die Öffnungen 16 aufweisenden Wandabschnitts 18, nach allen Seiten flüssigkeitsdicht ausgebildet.

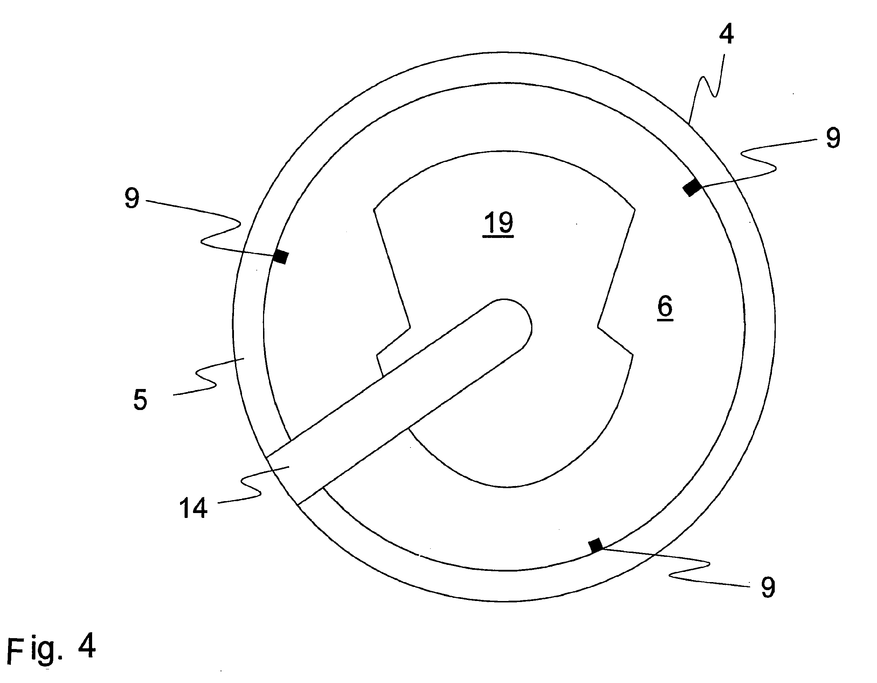

Während Figur 3 einen Schnitt durch die Siebvorrichtung zeigt, ergibt sich aus der Frontansicht gemäß Figur 4 darüber hinaus, dass die Auffangvorrichtung 17 sowie der Einwurftrichter 15 im Bereich der offenen Stirnseite 5 des Siebkorbs 4 mit einer Stirnwand 19 verschlossen sind, so dass auch von vorne kein Abwasser 2 in den Bereich der Förderschnecke 11 bzw. der Auffangvorrichtung 17 gelangen kann, wobei der Antriebsarm 14 selbstverständlich ebenfalls flüssigkeitsdicht gegenüber der Stirnwand 19 abgedichtet sein sollte.

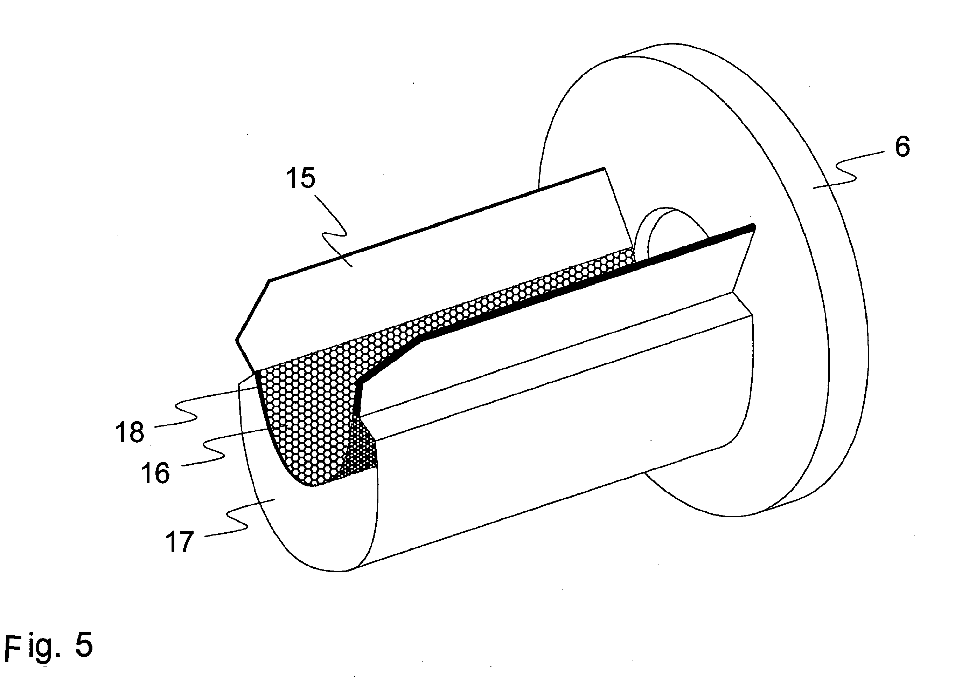

Figur 5 zeigt schließlich eine perspektivische Ansicht des Inneren eines Siebkorbs 4 einer erfindungsgemäßen Siebvorrichtung, wobei die Stirnwand 19 und der Siebkorb 4 selbst für eine besser Übersicht nicht dargestellt sind. Diese Ansicht zeigt schließlich, dass die Auffangvorrichtung 17 als nach unten geschlossener Trog ausgebildet ist, in den schließlich ein nicht gezeigtes Abpumprohr einer entsprechenden Abpumpeinrichtung 20 ragt. Alternativ kann selbstverständlich auch die Abpumpeinrichtung 20 selbst im Inneren der Auffangvorrichtung 17 angeordnet werden und über ein zugeordnetes Leitungssystem, beispielsweise mit dem der Siebvorrichtung nachgeschaltetem Abschnitt des Gerinnes 1, verbunden sein.

Neben der gezeigten Filtervorrichtung kann die erfindungsgemäße Auffangvorrichtung 17 schließlich auch in anderen rotierenden Filtern, insbesondere Trommelfiltern, zum Einsatz kommen, die um eine horizontal angeordnete Drehachse antreibbar sind.

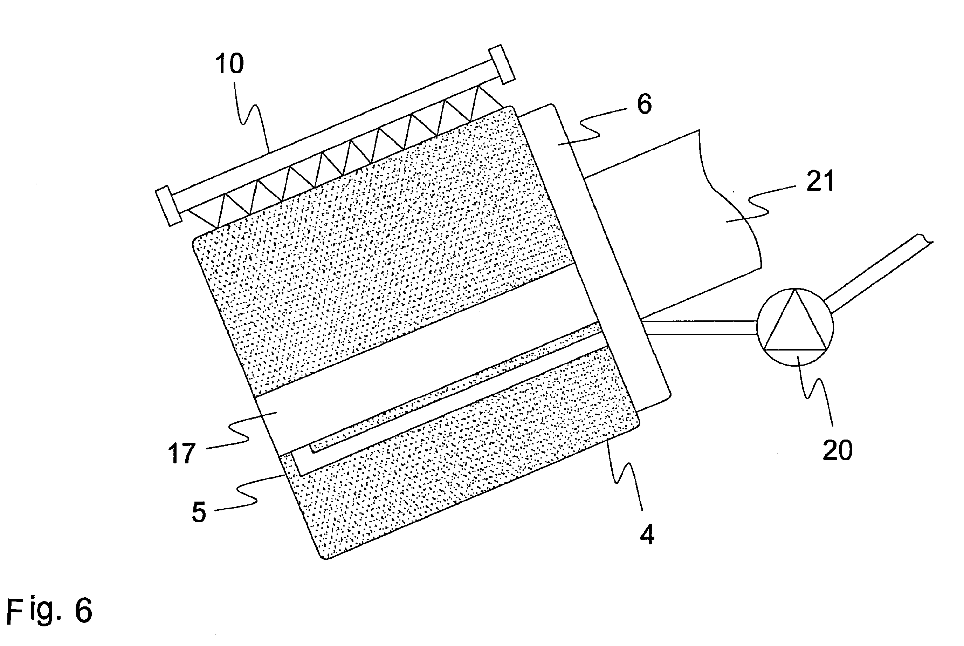

Auch in Filteranlagen, die für die Filtration besonders feiner Siebstoffe vorgesehen ist, bringt die Auffangvorrichtung 17 erhebliche Vorteile gegenüber dem Stand der Technik. So kann die Auffangvorrichtung 17 in Verbindung mit der Abpumpeinrichtung 20, wie sie in Figur 6 gezeigt ist, als Ersatz herkömmlicher Förderschnecken 11 dienen, die einen Austrag feiner Siebstoffe meist nicht zuverlässig bewerkstelligen können. Ist hierfür im mittigen Bereich des Siebelements (das mit Hilfe eines entsprechenden, nicht gezeigten Antriebs über eine Antriebsachse 21 antreibbar ist) eine erfindungsgemäße Auffangvorrichtung 17 angeordnet, so können auch feinste Siebstoffe aus der Siebvorrichtung entfernt werden. Die Siebstoffe, die sich auch bei derartigen Siebvorrichtungen an der rotierenden Innenfläche des Siebelements sammeln, werden wiederum beispielsweise mit Hilfe einer Spritzdüsenleiste 10 von der Siebfläche entfernt und gelangen schließlich in die beispielsweise trogartig ausgebildete Auffangvorrichtung 17 im Inneren des Filterelements. Das Siebgut und das Spritzwasser bilden schließlich eine Suspension, die mit Hilfe der Abpumpeinrichtung 20 abgesaugt und entsprechend weiterbearbeitet werden kann. Die Auffangvorrichtung 17 kann dabei beispielsweise einen U-förmigen bzw. halbkreisförmigen Querschnitt aufweisen und ist in der Regel im Bereich der Drehachse des Siebkorbs 4 angeordnet.

Im Übrigen ist die Erfindung nicht auf die dargestellten Ausführungsbeispiele beschränkt. So kann die Abpumpeinrichtung (20) gemäß Figur 6 selbstverständlich in vergleichbarer Weise auch in den Vorrichtungen, wie sie im Zusammenhang mit den Figuren 3 bis 5 beschrieben sind, angeordnet werden.

### Bezugszeichenliste

- 1: Gerinne
- 2: Abwasser
- 3: Wasserstand
- 4: Siebkorb
- 5: offene Stirnseite
- 6: geschlossene Stirnseite
- 7: Motor
- 8: Getriebe
- 9: Mitnehmerleiste
- 10: Spritzdüsenleiste
- 11: Förderschnecke
- 12: Auswurfstelle
- 13: Container
- 14: Antriebsarm
- 15: Einwurftrichter
- 16: Öffnung
- 17: Auffangvorrichtung
- 18: Wandabschnitt
- 19: Stirnwand
- 20: Abpumpeinrichtung
- 21: Antriebsachse

## Patentansprüche

1. Vorrichtung zum Entfernen von Siebgut aus einer Flüssigkeit, insbesondere aus Abwasser (2), mit zumindest einem Siebelement, beispielsweise in Form eines Siebkorbs (4), das im Bereich einer Stirnseite eine Zulauföffnung aufweist, durch die Flüssigkeit in den Innenraum des Siebelements einströmen kann, und mit einem Antrieb, mit dessen Hilfe das Siebelement um eine Drehachse rotierbar ist, wobei innerhalb des Siebelements eine Auffangvorrichtung (17) angeordnet ist zum Auffangen von Flüssigkeit und/oder Siebgut, **dadurch gekennzeichnet, dass** der Auffangvorrichtung (17) eine Abpumpeinrichtung (20) für die Flüssigkeit und/oder das Siebgut zugeordnet ist.

2. Vorrichtung nach Anspruch 1, **dadurch gekennzeichnet, dass** der Auffangvorrichtung (17) innerhalb des Siebelements ein Zuführbereich, beispielsweise in Form eines Einwurftrichters (15), für das Siebgut und/oder die Flüssigkeit zugeordnet ist.

3. Vorrichtung nach dem vorangegangenen Anspruch, **dadurch gekennzeichnet, dass** die Wandung der Auffangvorrichtung (17) außer im Bereich des Zuführbereichs gegenüber dem Innenraum des Siebelements flüssigkeitsdicht ausgebildet ist.

4. Vorrichtung nach einem oder mehreren der vorangegangenen Ansprüche, **dadurch gekennzeichnet, dass** die Auffangvorrichtung (17) trogartig ausgebildet ist.

5. Vorrichtung nach einem oder mehreren der Ansprüche 2 bis 4, **dadurch gekennzeichnet, dass** sich die Auffangvorrichtung (17) im Wesentlichen über die gesamte Länge oder einen Teilabschnitt des Zuführbereichs erstreckt.

6. Vorrichtung nach einem oder mehreren der vorangegangenen Ansprüche, **dadurch gekennzeichnet, dass** die Vorrichtung eine wenigstens teilweise innerhalb des Siebelements angeordnete Austragsvorrichtung für das Siebgut, vorzugsweise in Form einer Förderschnecke (11), aufweist.

7. Vorrichtung nach einem oder mehreren der Ansprüche 2 bis 6, **dadurch gekennzeichnet, dass** der Zuführbereich zumindest einen durchbrochenen Wandabschnitt (18) aufweist, der oberhalb der Auffangvorrichtung (17) angeordnet ist, wobei der durchbrochene Wandabschnitt (18) vorzugsweise als gemeinsame Wandung des Zuführbereichs und der Auffangvorrichtung (17) ausgebildet ist.

8. Vorrichtung nach dem vorangegangenen Anspruch, **dadurch gekennzeichnet, dass** der durchbrochene Wandabschnitt (18) des Zuführbereichs eine Siebweite aufweist, die kleiner oder gleich der Siebweite des Siebelements ist.

9. Vorrichtung nach einem oder mehreren der vorangegangenen Ansprüche, **dadurch gekennzeichnet, dass** die Auffangvorrichtung (17) und/oder der Zuführbereich zumindest einen lösbar angeordneten Wandabschnitt aufweisen.

10. Vorrichtung nach einem oder mehreren der vorangegangenen Ansprüche, **dadurch gekennzeichnet, dass** die Abpumpeinrichtung (20) zumindest ein Abzugsrohr aufweist, das sich in die Auffangvorrichtung (17) erstreckt, wobei die Abpumpeinrichtung (20) vorzugsweise außerhalb der Auffangvorrichtung (17) angeordnet ist.

11. Vorrichtung nach einem oder mehreren der vorangegangenen Ansprüche, **dadurch gekennzeichnet, dass** die Abpumpeinrichtung (20), insbesondere unter Zwischenschaltung einer Steuereinheit, mit einem Füllstandssensor in Wirkverbindung steht, der den Flüssigkeitspegel innerhalb der Auffangvorrichtung (17) detektiert.

12. Verfahren zum Entfernen von Siebgut aus einer Flüssigkeit, insbesondere aus Abwasser (2), wobei eine Siebvorrichtung zum Einsatz kommt mit zumindest einem Siebelement, beispielsweise in Form eines Siebkorbs (4), welches mit einem Antrieb um eine Drehachse rotierbar ist, und wobei Flüssigkeit und/oder Siebgut mit Hilfe einer innerhalb des Siebelements angeordneten Auffangvorrichtung (17) aufgefangen wird, **dadurch gekennzeichnet, dass** die Flüssigkeit und/oder das Siebgut nach dem Auffangen mittels einer Abpumpeinrichtung (20) aus der Auffangvorrichtung (17) abgezogen wird.

13. Verfahren nach dem vorangegangenen Anspruch, **dadurch gekennzeichnet, dass** die aufgefangene Flüssigkeit und/oder das aufgefangene Siebgut kontinuierlich oder chargenweise aus der Auffangvorrichtung (17) abgezogen werden.

14. Verfahren nach einem oder mehreren der Ansprüche 12 und 13, **dadurch gekennzeichnet, dass** die aufgefangene Flüssigkeit und/oder das aufgefangene Siebgut in Abhängigkeit der Betriebszeit der Siebvorrichtung und/oder des Flüssigkeits- bzw. Siebgutpegels innerhalb der Auffangvorrichtung (17) abgezogen werden.

15. Verfahren nach einem oder mehreren der Ansprüche 12 bis 14, **dadurch gekennzeichnet, dass** die abgezogene Flüssigkeit entweder der das Siebelement passierenden Flüssigkeit oder erneut der Siebvorrichtung zugeführt wird.

## Claims

1. Device for removing floating material from a liquid, especially from sewage (2), with at least one sieve element shaped, for example, like a filter basket (4) that in a front side has an inlet opening through which liquid can flow into the interior of the sieve element and is equipped with a drive so the sieve element can rotate around a rotating axis, wherein a collection device (17) for catching liquid and/or floating material is arranged within the sieve element **characterized in that** a pumping-out device (20) for the liquid and/or floating material is assigned to the collection device (17).

2. Device according to claim 1, **characterized in that** a feeding area shaped like a collecting funnel (15), for example, is assigned to the collection device (17) within the sieve element for the floating material and/or the liquid.

3. Device according to the preceding claim, **characterized in that** the side wall of the collection device (17) is built in a liquid-tight way with respect to the interior of the sieve element except in the feeding area.

4. Device according to one or several of the preceding claims, **characterized in that** the collection device (17) is built like a trough.

5. Device according to one or several of claims 2 to 4, **characterized in that** the collection device (17) extends essentially over the entire length or a portion of the feeding area.

6. Device according to one or several of the preceding claims, **characterized in that** the device has a discharge device for the floating material arranged at least partially inside the sieve element, preferably shaped like a screw conveyor (11).

7. Device according to one or several of claims 2 to 6, **characterized in that** the feeding area has at least one perforated wall section (18) arranged above the collection device (17), wherein the perforated wall section (18) is preferably executed as joint side wall of the feeding area and the collection device (17).

8. Device according to of the preceding claim, **characterized in that** the perforated wall section (18) of the feeding area has a mesh that is smaller than or equal to the mesh of the sieve element.

9. Device according to one or several of the preceding claims, **characterized in that** the collection device (17) and/or the feeding area have at least one detachably arranged wall section.

10. Device according to one or several of the preceding claims, **characterized in that** the pumping-out device (20) has at least one drain pipe that extends into the collection device (17), in which case the pumping-out device (20) is preferably arranged outside of the collection device (17).

11. Device according to one or several of the preceding claims, **characterized in that** the pumping-out device (20) is in operational contact with a level sensor, especially by connecting a control unit in series, which level sensor detects the liquid level inside the collection device (17).

12. Process for removing floating material from a liquid, especially from sewage (2), in which case a sieve device is used that has at least one sieve element shaped, for example, like a filter basket (4) equipped with a drive so it can rotate around a rotating axis, and wherein liquid and/or floating material is caught with the help of a collection device (17) arranged within the sieve element, **characterized in that** the liquid and/or floating material after the collecting is withdrawn from the collection device (17) with a pumping-out device (20).

13. Process according to the preceding claim, **characterized in that** the liquid caught and/or floating material caught is withdrawn from the collection device (17) continuously or in batches.

14. Process according to one or several of claims 12 and 13, **characterized in that** the liquid collected and/or floating material collected is withdrawn depending on the running time of the sieve device and/or the liquid or floating material level within the collection device (17).

15. Process according to one or several of claims 12 to 14, **characterized in that** the liquid withdrawn is fed to the liquid passing through the sieve element or to the sieve device anew.

## Revendications

1. Dispositif pour supprimer des matières à tamiser à partir d'un liquide, particulièrement de l'eau résiduaire (2), avec au moins un élément de tamis, par exemple en forme de panier de tamisage (4), qui présente dans la zone d'une face frontale une ouverture d'admission par laquelle du liquide peut pénétrer dans l'espace intérieur de l'élément de tamisage, et avec un entraînement, à l'aide duquel l'élément de tamisage peut tourner autour d'un axe de rotation, sachant qu'un dispositif de récupération (17) est disposé au sein de l'élément de tamisage pour récupérer le liquide et/ou la matière à tamiser, **caractérisé en ce qu'**un dispositif de pompage (20) pour le liquide et/ou la matière à tamiser est attribué au dispositif de récupération (17).

2. Dispositif selon la revendication 1, **caractérisé en ce qu'**une zone d'alimentation, par exemple sous la forme d'une trémie d'alimentation (15), est attribuée au dispositif de récupération (17) au sein de l'élément de tamisage pour la matière à tamiser et/ou le liquide.

3. Dispositif selon la revendication précédente, **caractérisé en ce que** la paroi du dispositif de récupération (17) se présente sous une forme étanche aux liquides à l'exception de la zone d'alimentation en face de l'espace intérieur de l'élément de tamisage.

4. Dispositif selon l'une quelconque ou plusieurs des revendications précédentes, **caractérisé en ce que** le dispositif de récupération (17) se présente sous la forme d'un godet.

5. Dispositif selon l'une quelconque ou plusieurs des revendications 2 à 4, **caractérisé en ce que** le dispositif de récupération (17) s'étend essentiellement sur toute la longueur ou sur une section partielle de la zone d'alimentation.

6. Dispositif selon l'une quelconque ou plusieurs des revendications précédentes, **caractérisé en ce que** le dispositif comporte un dispositif de déversement pour la matière à tamiser, de préférence sous la forme d'une vis sans fin (11), disposé au moins partiellement au sein de l'élément de tamisage.

7. Dispositif selon l'une quelconque ou plusieurs des revendications 2 à 6, **caractérisé en ce que** la zone d'alimentation présente au moins une partie de paroi ajourée (18), qui est disposée au-dessus du dispositif de récupération (17), sachant que la partie de paroi ajourée (18) se présente de préférence sous la forme d'une paroi commune de la zone d'alimentation et du dispositif de récupération (17).

8. Dispositif selon la revendication précédente, **caractérisé en ce que** la partie de paroi ajourée (18) de la zone d'alimentation présente une ouverture de tamis inférieure ou égale à l'ouverture de tamis de l'élément de tamisage.

9. Dispositif selon l'une quelconque ou plusieurs des revendications précédentes, **caractérisé en ce que** le dispositif de récupération (17) et/ou la zone d'alimentation présente(nt) au moins une section de paroi disposée de manière détachable.

10. Dispositif selon l'une quelconque ou plusieurs des revendications précédentes, **caractérisé en ce que** le dispositif de pompage (20) présente au moins un tube d'évacuation, qui s'étend dans le dispositif de récupération (17), sachant que le dispositif de pompage (20) est disposé de préférence hors du dispositif de récupération (17).

11. Dispositif selon l'une quelconque ou plusieurs des revendications précédentes, **caractérisé en ce que** le dispositif de pompage (20), particulièrement par intercalage d'une unité de commande, est en liaison fonctionnelle avec un capteur de niveau de remplissage, qui détecte le niveau de liquide au sein du dispositif de récupération (17).

12. Procédé pour supprimer des matières à tamiser à partir d'un liquide, particulièrement de l'eau résiduaire (2), sachant que le procédé utilise un dispositif de tamisage avec au moins un élément de tamis, par exemple en forme de panier de tamisage (4), qui est rotatif grâce à un entraînement et un axe de rotation, et sachant que le liquide et/ou la matière à tamiser est/sont récupéré(s) à l'aide d'un dispositif de récupération (17) disposé au sein de l'élément de tamisage, **caractérisé en ce que** le liquide et/ou la matière à tamiser est/sont évacué(s) du dispositif de récupération (17) à l'aide d'un dispositif de pompage (20) après la récupération.

13. Procédé selon la revendication précédente, **caractérisé en ce que** le liquide récupéré et/ou la matière tamisée récupérée est/sont évacué(s)du dispositif de récupération (17) continuellement ou par lots.

14. Procédé selon l'une quelconque ou plusieurs des revendications 12 et 13, **caractérisé en ce que** le liquide récupéré et/ou la matière tamisée récupérée est/sont évacué(s) en fonction de la durée de fonctionnement du dispositif de tamisage et/ou du niveau de liquide ou de matière tamisée au sein du dispositif de récupération (17).

15. Procédé selon l'une quelconque ou plusieurs des revendications 12 à 14, **caractérisé en ce que** le liquide évacué est refoulé soit au liquide parcourant l'élément de tamisage, soit à nouveau au dispositif de tamisage.
